# FASCICULE DE BREVET EUROPEEN

(11) **EP 2 195 503 B1**
(45) Date de publication et mention de la délivrance du brevet: **14.10.2015**
(21) Numéro de dépôt: 08846323.7
(22) Date de dépôt: 29.08.2008
(51) Int. Cl.: E05G 1/14

(54) **DISPOSITIF DE LIBERATION RAPIDE DE FLUIDE**
SCHNELL FREISETZENDE FLÜSSIGKEITSVORRICHTUNG
DEVICE FOR THE RAPID RELEASE OF A FLUID

(30) Priorité: 30.08.2007 FR 0706093
(43) Date de publication de la demande: 16.06.2010
(73) Titulaire: Oberthur Cash Protection, 21000 Dijon (FR)
(72) Inventeur: SAVARE, Thomas, F-92100 Boulogne-Billancourt (FR); BUETLER, Daniel, F-21121 Fontaine les Dijon (FR)
(74) Mandataire: Oudin, Stéphane
(86) Numéro de dépôt international: PCT/FR2008/001218
(87) Numéro de publication internationale: WO 2009/060146

(56) Documents cités:
- EP-A- 1 462 021
- DE-A1- 19 624 582
- FR-A- 2 846 698

## Description

La présente invention concerne un dispositif compact et rechargeable de libération rapide de fluide ainsi qu'un conteneur de transport sécurisé de valeurs comportant un tel dispositif pour effectuer le maculage desdites valeurs lors de l'effraction ou tentative d'effraction dudit conteneur.

Dans le domaine des dispositifs de libération de fluide, on connaît un certain nombre de systèmes comportant une chambre en forme générale de tube contenant le fluide et un piston apte à coulisser à l'intérieur de ladite chambre de manière à libérer le fluide par un orifice situé dans la chambre du coté opposé au piston. L'une des principales différences entre ces systèmes est la méthode mise en oeuvre pour faire coulisser ledit piston. En effet, la mise en mouvement du piston peut être manuelle, hydraulique, aéraulique ou mécanique. Les principaux inconvénients de ces dispositifs antérieurs sont les difficultés de fabrication et de mise en oeuvre, ainsi que leur encombrement relatif.

A cet égard, le brevet EP 1 560 994 divulgue un système de libération de fluide comprenant un réservoir tubulaire ayant une sortie et contenant du fluide, un piston coulissant de manière sensiblement étanche au fluide à l'intérieur dudit réservoir et un moyen d'alimentation en gaz sous pression du réservoir, de sorte que le piston est poussé vers ladite sortie et que le fluide est éjecté par la sortie. Le système comporte également un verrou activé électroniquement destiné à ouvrir ou fermer ledit moyen d'alimentation. Ce dispositif, appliqué au fluide de marquage des valeurs contenues dans un conteneur de transport sécurisé, lors de l'effraction ou tentative d'effraction dudit conteneur, est difficile à mettre en oeuvre et est particulièrement encombrant du fait du volume et de l'externalité de la réserve de gaz.

On connaît par ailleurs des dispositifs plus compacts, tels que ceux divulgués dans les brevets FR 2 846 698 ou EP 1 462 021, qui recourent à des générateurs de gaz comprimé de type chimique ou pyrotechnique. Toutefois, ces dispositifs ont été conçus de sorte que leur réutilisation et/ou leur rechargement n'est pas envisageable sans remplacement d'un nombre élevé de composants du dispositif, notamment du réservoir de fluide et du piston dans le cas du brevet FR 2 846 698. Le dispositif selon DE-A-19624582 divulgue les caractéristiques du préambule de la revendication 1.

La présente invention a pour but de remédier à ces divers inconvénients en proposant un dispositif de libération rapide de fluide qui est à la fois compact, rechargeable et réutilisable, avec un minimum de consommables, tout en étant particulièrement simple à réaliser et à mettre en oeuvre.

A cet effet, la présente invention a pour objet un dispositif rechargeable et réutilisable de libération rapide de fluide, comportant un réservoir en forme générale de tube ayant à l'une de ses extrémités, fermée par un premier flasque, un orifice de sortie et contenant ledit fluide à libérer, un piston coulissant de manière étanche à l'intérieur du réservoir le long de l'axe longitudinal dudit réservoir, le réservoir possédant à son autre extrémité, opposée audit orifice de sortie et fermée par un second flasque, un générateur de gaz apte à mettre en mouvement ledit piston de manière à ce que le fluide soit libéré par ledit orifice de sortie le plus rapidement possible, le générateur de gaz étant fixé de façon étanche et non permanente sur le second flasque, l'orifice de sortie étant obturé par un opercule de rupture apte à se déchirer sous la pression afin de libérer le fluide et enserré entre deux éléments dont l'un est amovible afin de permettre le remplacement dudit opercule, ledit dispositif étant remarquable en ce que le piston possède un évidement interne de sorte que la face de propulsion dudit piston en contact avec les gaz issus du générateur de gaz est située en amont au moins de la majeure partie du piston en contact avec le réservoir, ledit évidement étant réparti en deux volumes cylindriques superposés et coaxiaux, le volume en contact avec la face de propulsion étant de diamètre inférieur à celui du volume supérieur.

On désigne ici par générateur de gaz un dispositif contenant un ou plusieurs produits chimiques aptes à générer du gaz à la suite d'une réaction chimique ou d'une ignition ou d'un déclenchement d'un moyen d'allumage ou similaire.

On comprend bien l'avantage tant économique qu'écologique de la configuration spécifique du dispositif de libération selon l'invention qui peut être en grande partie réutilisé et qui nécessite uniquement le remplacement du générateur de gaz et de l'opercule ainsi qu'un rechargement en fluide après chaque utilisation.

Selon une caractéristique préférentielle de l'invention, le générateur de gaz est piloté électriquement et permet de régler le volume du fluide à libérer et la vitesse de libération dudit fluide.

Afin de faire mieux ressortir d'autres avantages et caractéristiques de la présente invention, on décrira ci-après à titre d'exemple non limitatif, une forme d'exécution préférée de ladite invention, en référence aux dessins annexés sur lesquels :
- la figure 1 est une vue extérieure en perspective du dispositif de libération de fluide,
- la figure 2 est une vue agrandie en coupe du dispositif de libération de fluide, suivant la ligne II-II de la figure 1.

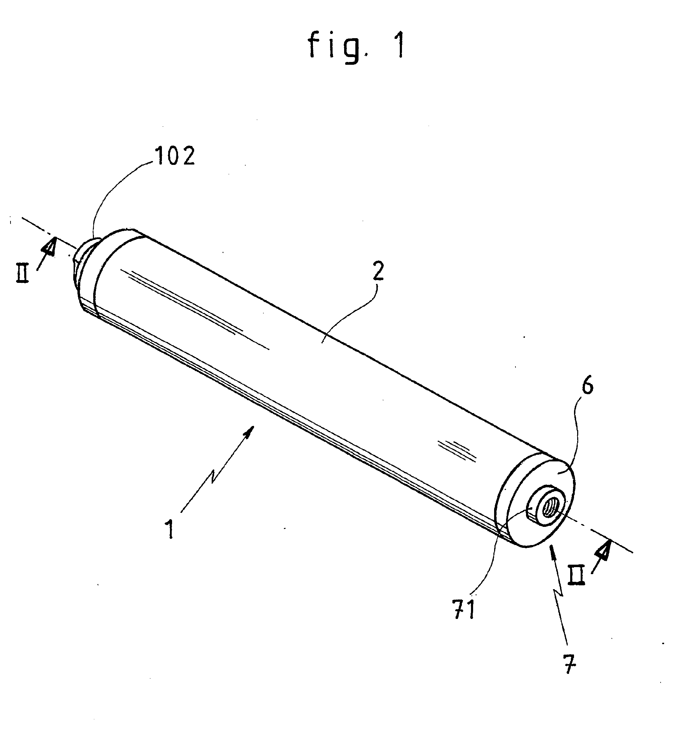

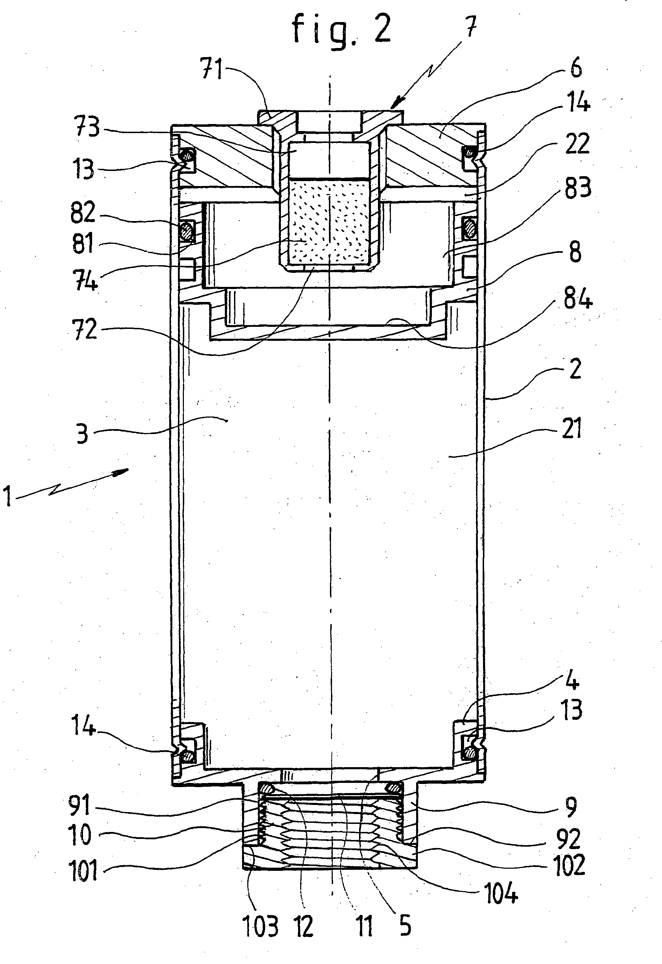

En référence aux figures 1 et 2, le dispositif 1 de libération de fluide comprend un réservoir 2 en forme générale de tube contenant un fluide 3, un premier flasque 4 de fermeture en forme générale de disque fixé de manière étanche à l'une des extrémités dudit réservoir 2 et muni d'un orifice de sortie 5 avantageusement circulaire débouchant des deux cotés et situé sensiblement au milieu dudit premier flasque 4, un second flasque 6 de fermeture en forme générale de disque fixé de manière étanche à l'autre extrémité dudit réservoir 2, un dispositif générateur de gaz 7 situé au voisinage du milieu du second flasque 6 et traversant de part en part ledit flasque 6 et un piston 8 apte à coulisser de manière sensiblement étanche audit fluide 3 à l'intérieur et le long de l'axe longitudinal dudit réservoir 2 depuis une position « stockage » où le réservoir 2 est rempli à une position « travail » où le réservoir 2 est vide.

Dans cette configuration, le piston 8 sépare le réservoir 2 en deux parties. La première partie comprise entre le premier flasque 4 et le piston 8 est la chambre de stockage 21 et la seconde partie comprise entre le second flasque 6 et le piston 8 est la chambre de propulsion 22. Il va de soi que le fluide 3 destiné à être libéré est contenu dans la chambre de stockage 21.

Le premier flasque 4 présente également en saillie sensiblement au milieu un premier élément tubulaire 9 de préférence cylindrique s'étendant vers l'extérieur du réservoir 2 dont le diamètre intérieur est supérieur au diamètre de l'orifice de sortie 5. La partie interne de cet élément tubulaire 9 possède une première partie femelle 91. Un second élément tubulaire 10 indépendant avantageusement cylindrique comprend une partie mâle 101 apte à coopérer avec ladite partie femelle 91 du premier élément tubulaire 9 de sorte à fixer de manière étanche et non permanente le second élément tubulaire 10 dans le premier élément tubulaire 9.

Pour des raisons économiques, les parties mâle et femelle (91, 101) sont avantageusement et respectivement un taraudage et un filetage par exemple de type hydraulique.

Le second élément tubulaire 10 comporte à l'une de ses extrémités un rebord périphérique 102 permettant de limiter la course de déplacement du second élément tubulaire 10 dans le premier élément tubulaire 9 en mettant en contact la face interne 103 du rebord 102 du second élément tubulaire 10 avec la face externe 92 du premier élément tubulaire 9.

De plus, le second élément tubulaire 10 est dimensionné de sorte que, lorsque lesdites faces internes et externes (103, 92) sont en contact, un opercule 11 de rupture est maintenu de façon étanche via un premier moyen d'étanchéité 12 par le second élément tubulaire 10 à l'intérieur du premier élément 9.

Pour des raisons économiques et de simplicité, le premier moyen d'étanchéité 12 est avantageusement un joint torique en silicone.

Cet opercule 11 permet d'obturer le réservoir 2 et de maintenir le fluide 3 à l'intérieur dudit réservoir 2 quand le piston 8 est en position « stockage » et est apte à se déchirer afin de libérer le fluide 3 lorsque le piston 8 commence à coulisser et que la pression à l'intérieur du réservoir 2 augmente. De ce fait, ledit opercule 11 sera réalisé de préférence en aluminium de faible épaisseur, par exemple 0,13 mm.

Compte tenu de ce qui précède et afin de pouvoir réutiliser le dispositif 1 après la déchirure de l'opercule 11 suivie de la libération totale du fluide 3, ledit opercule 11 est avantageusement remplacé en démontant le second élément tubulaire 10.

La partie interne du second élément tubulaire 10 possède une seconde partie femelle 104 apte à coopérer avec une partie mâle d'une tuyauterie afin de fixer de façon sensiblement étanche ladite tuyauterie sur le dispositif 1 et permettant par exemple d'acheminer le fluide 3 à un endroit bien défini. La seconde partie femelle 104 et la partie mâle de la tuyauterie sont avantageusement et respectivement un taraudage et un filetage de type hydraulique.

Le générateur de gaz 7 est apte à libérer dans un laps de temps très court une quantité de gaz suffisante pour mettre en mouvement à l'intérieur du réservoir 2 le piston 8 de manière à libérer le fluide 3 au travers de l'orifice de sortie 5.

Dans un mode de réalisation préférentiel, le générateur de gaz 7 est semblable à ceux utilisés dans les systèmes de coussins gonflables de sécurité pour les automobiles. Ainsi, ce générateur de gaz 7 comporte un corps 71 muni d'au moins un orifice 72 et contient un dispositif d'allumage 73 électronique en contact avec une réserve 74 contenant au moins un produit chimique, qui est de préférence de la poudre balistique. Ainsi, lorsque le dispositif d'allumage 73 est mis en marche, cela déclenche une réaction pyrotechnique dans la réserve 74 qui a pour principal effet de dégager rapidement au travers de l'orifice 72 du gaz en quantité et en pression suffisantes pour mettre en mouvement le piston 8.

Compte tenu de ce qui précède et afin de pouvoir réutiliser le dispositif 1 après la libération totale du fluide 3, le générateur de gaz 7 est avantageusement fixé de façon étanche et non permanente sur le second flasque 6.

Ainsi après la libération totale du fluide 3, on pourra démonter le générateur de gaz 7 usagé laissant ainsi une ouverture dans le second flasque 6, démonter le second élément tubulaire 10, retirer l'opercule 11 usagé, recharger la chambre de stockage 21 du réservoir 2 en fluide 3 par l'orifice de sortie 5 ce qui a pour effet de remettre le piston 8 en position « stockage » et d'évacuer les gaz de la chambre de propulsion 22 par ladite ouverture ; enfin on remettra un nouveau générateur de gaz 7, un nouvel opercule et on replacera le second élément tubulaire 10.

Il va de soi que l'Homme du Métier n'aura aucune difficulté à dimensionner la réserve 74 en fonction des caractéristiques suivantes :
- le volume de fluide 3 à libérer,
- la vitesse de propulsion du piston 8,
- la durée de libération dudit fluide 3.

Le piston 8 en forme générale de cylindre est muni d'au moins une gorge périphérique 81 apte à accueillir un second moyen d'étanchéité 82 de sorte à assurer l'étanchéité statique ou dynamique dudit piston 8 au fluide 3 contenu dans la chambre de stockage 21 du réservoir 2. Pour des raisons économiques et de simplicité, le second moyen d'étanchéité 82 est de préférence un joint torique en silicone.

Compte tenu des caractéristiques dynamiques du dispositif 1, le piston 8 possède un évidement interne 83 de sorte que la face 84 de propulsion dudit piston 8 en contact avec les gaz issus du générateur de gaz 7 est située en amont au moins de la majeure partie du piston 8 en contact avec le réservoir 2. De préférence, la face 84 est située en amont de la totalité des surfaces du piston en contact avec le réservoir 2. Selon une caractéristique de l'invention, cet évidement 83 est globalement cylindrique. En référence à la forme d'exécution représentée à la figure 2, l'évidement 83 est réparti en deux volumes cylindriques superposés et coaxiaux, le volume en contact avec la face 84 de propulsion étant de diamètre inférieur à celui du volume supérieur. De plus, la valeur de la hauteur du piston 8 est proche de la valeur du rayon du réservoir 2 cylindrique. Ainsi, dans cette configuration, lesdits gaz exercent sur la face 84 dudit piston 8 une force qui peut être assimilée à une force de traction et non pas une force de propulsion limitant ainsi les risques d'arc-boutement du piston 8 à l'intérieur du réservoir 2. En outre, cette configuration assure une usure quasi nulle du piston 8, ce qui permet avantageusement de le réutiliser tel quel après rechargement en fluide 3 du dispositif et remplacement du générateur de gaz 7 et de l'opercule 11.

De préférence, le piston 8 sera réalisé dans un matériau résistant avec un faible coefficient de friction. Par exemple, on utilisera un matériau polymérique synthétique comme du polyetheretherketone (PEEK). Avantageusement, il pourra s'agir de la référence PEEK™ 450G produit par Victrex, qui présente un coefficient de friction de 0.34 et un indice de dureté Rockwell R de 126.

On désigne par amont une position qui précède une autre dans le sens du déplacement du piston 8, à savoir depuis sa position « stockage » à sa position « travail ».

Selon un mode de réalisation préférentiel, les premier et second flasque (4, 6) possèdent une gorge 13 périphérique apte à recevoir un troisième moyen d'étanchéité 14, qui est de préférence un joint torique en silicone. Après avoir engagé chaque flasque (4, 6) muni de son troisième moyen d'étanchéité 14 dans le réservoir 2, une opération de sertissage est réalisée de manière à ce que la zone de matière déformée dudit réservoir 2 pénètre en partie dans ladite gorge 13 en comprimant ledit moyen d'étanchéité 14 afin d'assurer l'étanchéité de chaque assemblage.

Compte tenu de ce qui précède, le réservoir 2 et les flasques (4, 6) sont avantageusement métalliques. Pour des raisons de limitation de poids, ils sont réalisés à partir d'un alliage léger ; de préférence il s'agit d'un alliage d'aluminium.

L'Homme du Métier n'aura aucune difficulté à concevoir d'une autre manière les différents assemblages étanches, en remplaçant par exemple les premier, second et troisième moyens d'étanchéité (12, 14, 82) par tout autre moyen d'étanchéité procurant des effets similaires comme par exemple du mastic ou des joints à lèvres, sans sortir du cadre de la présente invention.

De même, afin de résister aux contraintes mécaniques générées notamment par la réaction pyrotechnique, l'Homme du Métier n'aura aucune difficulté à dimensionner les éléments constitutifs du dispositif 1 et notamment leur épaisseur.

De plus, le générateur de gaz 7 est de préférence un générateur pyrotechnique, mais il peut être substitué par tout autre générateur de gaz tel que des générateurs de gaz chimiques, hybrides, de types gaz froid ou analogues ou par tout autre moyen de génération de gaz procurant des effets similaires.

Enfin, il va de soi que les matériaux employés pour réaliser les éléments constitutifs du dispositif 1 doivent être compatibles avec le fluide 3 contenu dans le réservoir 2, notamment être chimiquement inertes vis-à-vis du fluide.

Un second objet de la présente invention est un conteneur de transport sécurisé de valeurs comprenant et mettant en oeuvre un dispositif 1 de libération rapide de fluide selon la revendication 1 permettant pour le maculage desdites valeurs, lors de l'effraction ou tentative d'effraction dudit conteneur.

Dans cette application du dispositif 1, le fluide 3 est un liquide agressif ou colorant et indélébile, et au moins un dispositif 1 est disposé à l'intérieur dudit conteneur de transport à coté du compartiment de stockage des valeurs et est relié par la seconde partie femelle 104 à un dispositif d'aspersion, par exemple une rampe, permettant de maculer lesdites valeurs.

De préférence, le liquide de maculation contient un traceur chimique permettant de relier à un vol ou une agression donnée des valeurs maculées retrouvées postérieurement.

Ainsi, lors de l'effraction ou tentative d'effraction dudit conteneur, le générateur de gaz 7 se déclenche, propulse le piston 8 et libère le liquide de maculation 3 à travers l'orifice 5 et le dispositif d'aspersion pour marquer de façon permanente les valeurs.

En outre, le dispositif 1 peut, selon ses domaines d'applications, contenir d'autres fluides 3 tels que par exemple : du gel, de la colle, du mastic, de l'encre de maculation invisible, du gaz inerte pour une application dans le domaine de la protection incendie, etc.

## Revendications

1. Dispositif (1) rechargeable et réutilisable de libération rapide de fluide (3), comportant un réservoir (2) en forme générale de tube ayant à l'une de ses extrémités, fermée par un premier flasque (4), un orifice de sortie (5) et contenant ledit fluide (3) à libérer, un piston (8) coulissant de manière étanche à l'intérieur du réservoir (2) le long de l'axe longitudinal dudit réservoir (2), le réservoir (2) possédant à son autre extrémité, opposée audit orifice de sortie (5) et fermée par un second flasque (6), un générateur de gaz (7) apte à mettre en mouvement ledit piston (8) de manière à ce que le fluide (3) soit libéré par ledit orifice de sortie (5) le plus rapidement possible, le générateur de gaz (7) étant fixé de façon étanche et non permanente sur le second flasque (6), l'orifice de sortie (5) étant obturé par un opercule (11) de rupture apte à se déchirer sous la pression afin de libérer le fluide (3) et enserré entre deux éléments (9,10) dont l'un est amovible afin de permettre le remplacement dudit opercule (11), ledit dispositif (1) étant **caractérisé en ce que** le piston (8) possède un évidement interne (83) de sorte que la face (84) de propulsion dudit piston (8) en contact avec les gaz issus du générateur de gaz (7) est située en amont au moins de la majeure partie du piston (8) en contact avec le réservoir (2), ledit évidement (83) étant réparti en deux volumes cylindriques superposés et coaxiaux, le volume en contact avec la face (84) de propulsion étant de diamètre inférieur à celui du volume supérieur.

2. Dispositif (1) suivant la revendication 1, **caractérisé en ce que** le générateur de gaz (7) est choisi parmi le groupe chimique, pyrotechnique, hybride ou de type à gaz froids.

3. Dispositif (1) suivant l'une quelconque des revendications 1 ou 2, **caractérisé en ce que** le corps (71) contient une réserve (74) et un dispositif d'allumage (73) électrique en contact avec ladite réserve (74) contenant au moins un produit chimique apte à générer du gaz à la suite d'une ignition due au déclenchement dudit dispositif d'allumage (73).

4. Conteneur de transport sécurisé de valeurs, comportant au moins un dispositif (1) de libération rapide de fluide (3) selon l'une quelconque des revendications précédentes.

5. Conteneur de transport sécurisé suivant la revendication précédente, **caractérisé en ce que** le fluide (3) est un liquide agressif ou colorant et indélébile.

6. Conteneur de transport sécurisé suivant l'une des revendications 4 ou 5, **caractérisé en ce que** le fluide (3) comporte un traceur chimique.

## Patentansprüche

1. Nachladbare und wiederverwendbare Vorrichtung (1) zur raschen Freisetzung einer Flüssigkeit (3), einen Behälter (2) umfassend, der allgemein die Form eines Rohres aufweist, und an einem seiner Enden, das durch einen ersten Flansch (4) verschlossen ist, eine Auslauföffnung (5) enthält und die besagte freizusetzende Flüssigkeit (3) enthält, einen Kolben (8), der im Inneren des Behälters (2) in der Längsachse des besagten Behälters (2) dicht gleitet, wobei der Behälter (2) an seinem anderen Ende, das gegenüber der besagten Auslauföffnung (5) liegt, und durch einen zweiten Flansch (6) verschlossen ist, einen Gasgenerator (7) besitzt, der in der Lage ist, den besagten Kolben (8) derart in Bewegung zu setzen, dass die Flüssigkeit (3) so rasch wie möglich durch die besagte Auslauföffnung (5) freigesetzt wird, wobei der Gasgenerator (7) dicht und nicht dauerhaft auf dem zweiten Flansch (6) befestigt ist, wobei die Auslauföffnung (5) durch einen Berstverschluss (11) verschlossen wird, der in der Lage ist, unter dem Druck zu reißen, um die Flüssigkeit (3) freizusetzen, und zwischen zwei Elementen (9, 10) eingeschlossen ist, von denen eines abgenommen werden kann, um den besagten Berstverschluss (11) austauschen zu können, wobei die besagte Vorrichtung (1) **dadurch gekennzeichnet ist, dass** der Kolben (8) eine innere Aussparung (83) besitzt, sodass sich die Antriebsfläche (84) des besagten Kolbens (8), die mit den Gasen aus dem Gasgenerator (7) in Berührung kommt, vor zumindest dem größten Teil des mit dem Behälter (2) in Kontakt befindlichen Kolbens (8) befindet, wobei die besagte Aussparung (83) auf zwei überlagerte und koaxiale zylindrische Volumina aufgeteilt ist, und das Volumen, das mit der Antriebsfläche (84) in Kontakt steht einen kleineren Durchmesser aufweist, als das obere Volumen.

2. Vorrichtung (1) nach Anspruch 1, **dadurch gekennzeichnet, dass** der Gasgenerator (7) aus der chemischen, pyrotechnischen, hybriden Gruppe oder aus einer Gruppe von kalten Gasen ausgewählt wird.

3. Vorrichtung (1) nach irgendeinem der Ansprüche 1 oder 2, **dadurch gekennzeichnet, dass** das Gehäuse (71) einen Vorratsraum (74) und eine elektrische Zündvorrichtung (73) enthält, die in Kontakt mit dem besagten Vorratsraum (74) steht, der zumindest eine Chemikalie enthält, die in der Lage ist, nach einer Zündung durch die Auslösung der besagten Zündvorrichtung (73) Gas zu generieren.

4. Gesicherter Transportbehälter für Wertgegenstände, zumindest eine Vorrichtung (1) zur raschen Freisetzung einer Flüssigkeit (3) nach irgendeinem der vorherigen Ansprüche umfassend.

5. Gesicherter Transportbehälter nach dem vorherigen Anspruch, **dadurch gekennzeichnet, dass** die Flüssigkeit (3) eine aggressive Flüssigkeit oder ein Farbstoff ist und unlöschbar ist.

6. Gesicherter Transportbehälter nach einem der Ansprüche 4 oder 5, **dadurch gekennzeichnet, dass** die Flüssigkeit (3) einen chemischen Marker enthält.

## Claims

1. Rechargeable and reusable device (1) for the rapid release of a fluid (3), comprising an overall tube-shaped reservoir (2) having an outlet opening (5) at one of the ends thereof closed by a first end plate (4) and containing said fluid (3) to be released, a piston (8) sliding leaktightly inside the reservoir (2) along the longitudinal axis of said reservoir (2), the reservoir (2) having a gas generator (7) at the other end thereof opposite said outlet opening (5) and closed by a second end plate (6), which is capable of setting said piston (8) in motion so that the fluid (3) is released through said outlet opening (5) as rapidly as possible, the gas generator (7) being fixed leaktightly and non-permanently to the second end plate (6), the outlet orifice (5) being closed off by a rupture cap (11) able to tear under pressure in order to release the fluid (3) and gripped between two elements (9, 10), one of which is removable to enable said cap (11) to be replaced, said device (1) being **characterised in that** the piston (8) has an internal recess (83) whereby the propulsion face (84) of said piston (8) in contact with the gases coming from the gas generator (7) is situated upstream from at least the major portion of the piston (8) in contact with the reservoir (2), said recess (83) being distributed in two superimposed and coaxial cylindrical spaces, the space in contact with the propulsion face (84) having a diameter less than that of the upper space.

2. Device (1) according to claim 1, **characterised in that** the gas generator (7) is chosen from amongst the chemical, pyrotechnic, hybrid or cold gas type group.

3. Device (1) according to either of claims 1 or 2, **characterised in that** the body (71) contains a reserve (74) and an electrical ignition device (73) in contact with said reserve (74) containing at least one chemical product capable of producing gas following an ignition due to the triggering of said ignition device (73).

4. Secure transport container for valuables, comprising at least one device (1) for the rapid release of a fluid (3), according to any of the preceding claims.

5. Secure transport container according to the preceding claim, **characterised in that** the fluid (3) is an aggressive liquid or indelible colouring liquid.

6. Secure transport container according to one of claims 4 or 5, **characterised in that** the fluid (3) comprises a chemical tracer.
